# EUROPEAN PATENT APPLICATION

(11) **EP 2 192 597 A1**
(43) Date of publication of application: **02.06.2010**
(21) Application number: 08831805.0
(22) Date of filing: 22.09.2008
(51) Int. Cl.: H01B 1/06, C08L 61/06, C08L 71/10, C08L 81/02, H01M 4/86, H01M 8/02, H01M 8/10

(54) **POLYMER ELECTROLYTE COMPOSITION**

(30) Priority: 20.09.2007 JP 2007243630
(71) Applicant: Sumitomo Chemical Company, Limited, Tokyo 104-8260 (JP)
(72) Inventor: YASHIRO, Arihiro, Tsukuba-shi Ibaraki 305-0045 (JP); SASAKI, Shigeru, Tsukuba-shi Ibaraki 300-3261 (JP)
(74) Representative: Vossius & Partner
(86) International application number: PCT/JP2008/067594
(87) International publication number: WO 2009/038239

(57) **Abstract**

Disclosed is a polymer electrolyte composition containing components (A) and (B). (A) a polymer electrolyte containing a segment having an ion-exchange group and a segment having substantially no ion-exchange groups, which is obtained using block copolymerization or graft copolymerization as a copolymerization method (B) a condensate of a phenol and an aldehyde compound

## Description

### TECHNICAL FIELD

The present invention relates to a polymer electrolyte composition. More specifically, the present invention relates to a polymer electrolyte composition that is ideal for producing a member of a solid polymer fuel cell.

### BACKGROUND ART

Solid polymer fuel cells (hereafter also abbreviated as "fuel cells") are electric power generation devices that generate electrical power via a chemical reaction between hydrogen and oxygen, and hold great promise as a possible next generation energy source in fields such as the electrical equipment industry and the automotive industry. In terms of the polymer electrolyte membrane in the fuel cells, there has recently been considerable attention focused on replacing conventional fluorine-based polymer electrolytes with hydrocarbon-based polymer electrolytes, which are inexpensive and exhibit excellent heat resistance.

As the hydrocarbon-based polymer electrolyte, if a polymer electrolyte is used that is capable of forming a polymer electrolyte membrane in which a polymer segment having an ion-conductive component and a polymer segment having no ion-conductive component exhibit microphase separation, then in the polymer electrolyte membrane, the polymer segment having an ion-conductive component forms a favorable ion conduction path, and has ideal properties for a fuel cell member exhibiting excellent ion conductivity. Accordingly, the development of the hydrocarbon-based polymer electrolytes has been the subject of numerous investigations (for example, see Japanese Unexamined Patent Application, First Publication No. 2003-31232 (claims), Japanese Unexamined Patent Application, First Publication No. 2007-177197 (claims, and Japanese Unexamined Patent Application, First Publication No. 2003-113136 (claims)).

However, compared with membranes formed from a fluorine-based polymer electrolyte, membranes formed from a hydrocarbon-based polymer electrolyte have been identified as suffering from lower long-term operational stability (hereafter referred to as "long-term stability") for the fuel cell. Many theories have been postulated as to the cause of this impairment of the long-term stability, and one known cause is degradation of the membrane caused by peroxides (such as hydrogen peroxide) or radicals generated from those peroxides during operation of the fuel cell. For that reason, improving the resistance of the polymer electrolyte membrane to peroxides and radicals (hereafter referred to as the "radical resistance") is one possible measure for improving the long-term stability of solid polymer fuel cells.

In a fuel cell that employs a polymer electrolyte membrane having inadequate radical resistance, long-term operation such as repeated starting and stopping tends to cause a marked degradation of the polymer electrolyte membrane, resulting in reduced ion conductivity and a reduction in the electric power generation performance of the fuel cell itself.

On the other hand, in the field of polymer materials, antioxidants such as hindered phenol-based antioxidants are widely used for the purposes of suppressing melt degradation during processing and oxidative degradation that occurs over time. However, when such antioxidant is used in a fuel cell polymer electrolyte membrane with the aim of improving the radical resistance, then the fuel cell properties such as the electric power generation performance may deteriorate. Accordingly, the development of a polymer electrolyte membrane that exhibits excellent long-term stability while maintaining practically applicable electric power generation properties has been keenly sought.

### DISCLOSURE OF INVENTION

In light of these circumstances, an object of the present invention is to provide a polymer electrolyte membrane that has sufficient ion conductivity to realize practically applicable electric power generation properties and also exhibits favorable radical resistance, and also to provide a polymer electrolyte composition capable of producing such a polymer electrolyte membrane. Moreover, another object of the present invention is to provide a solid polymer fuel cell having excellent long-term stability that uses the polymer electrolyte membrane.

The inventors of the present invention intensively investigated to solve the aforementioned problem, and result in completing the present invention. In other words, the present invention provides the following aspect [1].
[1] A polymer electrolyte composition containing the following components (A) and (B):
   (A) a polymer electrolyte which contains a segment having an ion-exchange group and a segment having substantially no ion-exchange groups and the copolymerization mode of which is block copolymerization or graft copolymerization,
   (B) a condensate of a phenol and an aldehyde compound.
   Moreover, the present invention also provides the following aspects [2] to [10], which represent preferred embodiments of the composition according to aspect [1] above.
[2] The polymer electrolyte composition according to [1], wherein the component (B) is a condensate that is soluble in a solvent.
[3] The polymer electrolyte composition according to [1] or [2], wherein the component (B) is a condensate having a molecular weight of 500 or more.
[4] The polymer electrolyte composition according to any one of [1] to [3],
   wherein the component (B) is a condensate of at least one phenol selected from the group consisting of phenol, cresol and xylenol, and an aldehyde compound.
[5] The polymer electrolyte composition according to any one of [1] to [4],
   wherein the amount of the component (B), relative to the combined weight of the component (A) and the component (B), is from 0.01 to 25% by weight.
[6] The polymer electrolyte composition according to any one of [1] to [5],
   wherein the component (A) is an aromatic polymer electrolyte.
[7] The polymer electrolyte composition according to any one of [1] to [6],
   wherein the component (A) is an aromatic polymer electrolyte in which the segment having an ion-exchange group has an aromatic ring in the main chain of the segment, and may further have a side chain containing an aromatic ring, and has an ion-exchange group bonded via a direct bond to at least one of the aromatic ring in the main chain and the aromatic ring in the side chain.
[8] The polymer electrolyte composition according to any one of [1] to [7],
   wherein the component (A) is a polymer electrolyte containing a segment having an ion-exchange group, the segment being represented by the following formula (1a), formula (2a), formula (3a) or formula (4a): 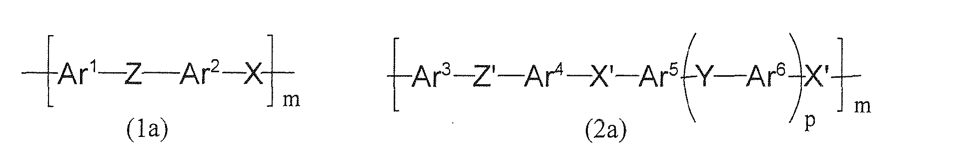 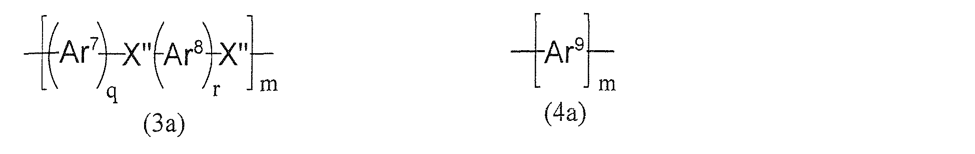 wherein m represents an integer of 5 or more, Ar¹ to Ar⁹ each independently represents a divalent aromatic group which has an aromatic ring in the main chain thereof and may further have an aromatic ring as a side chain, and in which an ion-exchange group is bonded directly to at least one of the aromatic ring in the main chain and the aromatic ring in the side chain, Z and Z' each independently represents CO or SO₂, X, X' and X" each independently represents O or S, Y represents a direct bond or a group represented by the following formula (1c), p represents 0, 1 or 2, and q and r each independently represents 1, 2 or 3, 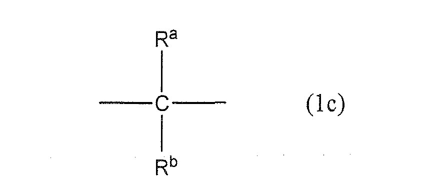 wherein R^{a} and R^{b} each independently represents a hydrogen atom, an alkyl group of 1 to 10 carbon atoms that may have a substituent, an alkoxy group of 1 to 10 carbon atoms that may have a substituent, an aryl group of 6 to 18 carbon atoms that may have a substituent, an aryloxy group of 6 to 18 carbon atoms that may have a substituent, or an acyl group of 2 to 20 carbon atoms that may have a substituent, and R^{a} and R^{b} may be linked to form a ring.
[9] The polymer electrolyte composition according to any one of [1] to [8], wherein the component (A) is a polymer electrolyte containing a segment having substantially no ion-exchange groups represented by the following formula (1b), formula (2b), formula (3b) or formula (4b): 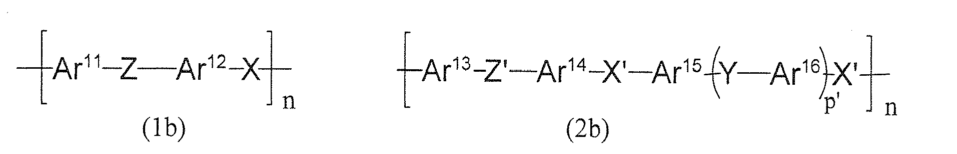 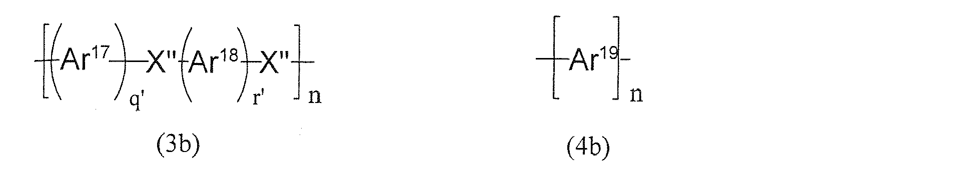 wherein n represents an integer of 5 or more, Ar¹¹ to Ar¹⁹ each independently represents a divalent aromatic group that has an aromatic ring in the main chain thereof and may further have an aromatic ring as a side chain, Z and Z' each independently represents CO or SO₂, X, X' and X" each independently represents O or S, Y represents a direct bond or a group represented by the following formula (1c), p' represents 0, 1 or 2, and q' and r' each independently represents 1, 2 or 3, 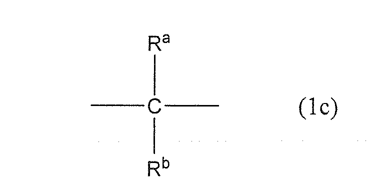 wherein R^{a} and R^{b} each independently represents a hydrogen atom, an alkyl group of 1 to 10 carbon atoms that may have a substituent, an alkoxy group of 1 to 10 carbon atoms that may have a substituent, an aryl group of 6 to 18 carbon atoms that may have a substituent, an aryloxy group of 6 to 18 carbon atoms that may have a substituent, or an acyl group of 2 to 20 carbon atoms that may have a substituent, and R^{a} and R^{b} may be linked to form a ring.
[10] The polymer electrolyte composition according to any one of [1] to [9],
   wherein the component (A) is a polymer electrolyte having a sulfonic acid group.
   Furthermore, the present invention provides the following aspects [11] to [16], each of which uses a polymer electrolyte composition according to any of the aspects described above.
[11] A polymer electrolyte membrane, formed from the polymer electrolyte composition according to any one of [1] to [10].
[12] The polymer electrolyte membrane according to [11], having a microphase-separated structure containing a phase in which the density of the segment having an ion-exchange group is higher than the density of the segment having substantially no ion-exchange groups, and a phase in which the density of the segment having substantially no ion-exchange groups is higher than the density of the segment having an ion-exchange group.
[13] A membrane-electrode assembly, containing the polymer electrolyte membrane according to [11].
[14] A catalyst layer, formed from the polymer electrolyte composition according to any one of [1] to [10].
[15] A membrane-electrode assembly, containing the catalyst layer according to [14].
[16] A solid polymer fuel cell, containing the membrane-electrode assembly according to [13] or [15].

### BEST MODE FOR TARRYING OUT THE INVENTION

Hereinafter, the polymer electrolyte composition of the present invention is specifically described.

### <Component (B)>

As mentioned above, the component (B) is a condensate of a phenol and an aldehyde compound. Here, the term "phenol" means a compound having 1 to 3 phenolic hydroxyl groups bonded to a benzene ring or a naphthalene ring, wherein the phenol may also have an alkyl group of 1 to 6 carbon atoms or an aryl group of 6 to 10 carbon atoms bonded to the aromatic ring as a substituent. Specific examples of the phenol include phenol, o-cresol, m-cresol, p-cresol, o-ethylphenol, m-ethylphenol, p-ethylphenol, o-propylphenol, m-propylphenol, p-propylphenol, m-isopropylphenol, p-isopropylphenol, m-tert-butylphenol, o-hexylphenol, m-hexylphenol, o-decylphenol, m-decylphenol, o-dodecylphenol, m-dodecylphenol, o-hexadecylphenol, m-hexadecylphenol, o-eicosylphenol, m-eicosylphenol, m-cyclopentylphenol, o-cyclohexylphenol, m-cyclohexylphenol, o-cycloheptylphenol, m-cycloheptylphenol, o-phenylphenol, m-phenylphenol, o-toluylphenol, m-toluylphenol, o-naphthylphenol, m-naphthylphenol, 2,5-xylenol, 2,3-xylenol, 3,5-xylenol, 2-ethyl-5-methylphenol, 2-ethyl-3-methylphenol, 3-ethyl-5-methylphenol, 2-propyl-5-methylphenol, 2-propyl-3-methylphenol, 3-isopropyl-5-methylphenol, 2-butyl-5-methylphenol, 2-butyl-3-methylphenol, 3-tert-butyl-5-methylphenol, 5-tert-butyl-2-methylphenol, 2-tert-butyl-5-methylphenol, 2-hexyl-5-methylphenol, 2-hexyl-3-methylphenol, 3-hexyl-5-methylphenol, 3-cyclohexyl-5-methylphenol, 5-cyclohexyl-2-methylphenol, 2-cyclohexyl-5-methylphenol, 2-phenyl-5-methylphenol, 2-phenyl-3-methylphenol, 3-phenyl-5-methylphenol, 2-naphthyl-5-methylphenol, 2-naphthyl-3-methylphenol, 3-naphthyl-5-methylphenol, 2,5-diethylphenol, 2,3-diethylphenol, 3,5-diethylphenol, 2,5-dipropylphenol, 2,3-dipropylphenol, 3,5-dipropylphenol, 2,5-biscyclohexylphenol, 2,3-biscyclohexylphenol, 3,5-biscyclohexylphenol, 2,5-diphenylphenol, 2,3-diphenylphenol, 3,5-diphenylphenol, 2,3,4-trimethylphenol, 1-naphthol, 2-naphthol, 2-methyl-1-naphthol, 3-methyl-1-naphthol, 6-methyl-1-naphthol, 2-ethyl-1-naphthol, 3-ethyl-1-naphthol, 6-ethyl-1-naphthol, 1-methyl-2-naphthol, 3-methyl-2-naphthol, 6-methyl-2-naphthol, 1-ethyl-2-naphthol, 3-ethyl-2-naphthol, 6-ethyl-2-naphthol, resorcinol, 2-inetliylresorcinol, hydroquinone, 2-methylhydroquinone, tert-butylhydroquinone, fluoroglucinol, and naphthalene-2,6-diol.

Furthermore, from the viewpoint of controlling the molecular weight of the condensate, a phenol having only a single site for reaction with the aldehyde compound may be used in the production of the condensate. When positioned at a molecular chain terminal during the condensation process, such phenol stops the progression of the condensation reaction at that terminal. Specific examples of this type of phenol having only a single site for reaction with the aldehyde compound include 2,6-xylenol, 2,4-xylenol and 2,3,4-trimethylphenol.

Of the phenols listed above, a phenol selected from the group consisting of phenol, o-cresol, m-cresol and p-cresol is preferred as the phenol that gives rise to the condensate of the component (B). By using these preferred phenols, the production of the condensate tends to be comparatively simple. Furthermore, the resulting condensate has almost no so-called hindering functional groups that hinder the phenolic hydroxyl groups. Here, the term "hindering" is a term that describes the geometric properties of a molecule, so that a hindering functional group means a bulky group bonded to a carbon atom adjacent to the carbon atom to which the phenolic hydroxyl group is bonded (in the case of a phenol where a hydroxyl group is bonded to a benzene ring, a bulky group bonded to the o-position relative to the phenolic hydroxyl group). Typical examples of these bulky groups include a tert-butyl group or cyclohexyl group.

However, a phenol having hindering functional groups may be used in the production of the condensate, provided that progression of the condensation reaction that yields the condensate is not inhibited dramatically, and provided that the radical resistance of fuel cell members such as the polymer electrolyte membrane described below is not significantly impaired. In such cases, the total amount of such phenols having hindering functional groups is preferably not more than 20 mol%, and more preferably not more than 10 mol%, of the combined total of all the phenols used in the production of the condensate.

The aldehyde compound mentioned above means a compound having a -CHO group in the molecule. Specific examples include aliphatic aldehydes and aromatic aldehydes, such as formaldehyde, acetaldehyde, propanal, butanal, hexanal, octanal, decanal, dodecanal, hexadecanal, eicosanal, 2-methylpropanal, 2-methylbutanal, 2-ethylbutanal, 2,2-dimethylpropanal, acrolein, 2-butenal, 2-hexenal, 2-octenal, acetylene aldehyde, 2-butynal, 2-hexynal, 2-octynal, cycloheptylcarbaldehyde, cyclohexylcarbaldehyde, benzaldehyde, 1-naphthaldehyde, 2-naphthaldehyde and styrylaldehyde. Further, polymer compounds that generate an aldehyde compound upon depolymerization, and compounds having an aldehyde group that has been protected with an acetal group or hemiacetal group may also be used as the aldehyde compound used in the production of the condensate.

A single aldehyde compound may be used, or two or more aldehyde compounds may be mixed together and supplied to the condensate production process. Preferred aldehyde compounds include formaldehyde and/or acetaldehyde, and formaldehyde is particularly desirable. A condensate produced using formaldehyde as the aldehyde compound becomes the condensate in which phenol moieties linked together via methylene (-CH₂-) groups, therefore, it offers the advantage that no hindering functional groups are produced adjacent to the phenolic hydroxyl group of the resulting condensate. A paraformaldehyde (a formaldehyde precursor) that generates formaldehyde on depolymerization, or formalin, which is an aqueous solution of formaldehyde, may also be used instead of the formaldehyde. Furthermore, compounds in which the aldehyde group of formaldehyde has been converted to an acetal group or hemiacetal group using an appropriate alcohol may also be used.

The condensate of the component (B) can be obtained by performing a condensation between one or two or more of the above phenols and one or two or more of the above aldehyde compounds.

The reaction conditions for the condensation reaction between the phenol and the aldehyde compound are not particularly limited, and the conditions may be optimized in accordance with the types of raw materials used. A typical condensation reaction can be performed in the presence or absence of a reaction solvent, using an acid catalyst, a metal salt catalyst or an alkali catalyst. The reaction temperature is from 0 to 200°C, preferably from 50 to 150°C, and more preferably from 60 to 120°C. The reaction time is from 0.1 to 30 hours, and preferably from 1 to 20 hours. Specific examples of the acid catalyst include inorganic acids such as sulfuric acid, hydrochloric acid, nitric acid and phosphoric acid, and organic acids such as acetic acid, oxalic acid, masonic acid and toluenesulfonic acid. Specific examples of the metal salt catalyst include divalent metal salts such as magnesium acetate and zinc acetate, specific examples of the alkali catalyst include sodium hydroxide, potassium hydroxide, cesium hydroxide, sodium carbonate, sodium bicarbonate, ammonia, tetramethylammonium hydroxide, triethylamine, morpholine and pyridine. The amount used of the above catalyst is preferably from 0.1 to 50% by weight, and more preferably from 0.5 to 30% by weight, relative to the total weight of the phenol.

Examples of reaction solvents that may be used in the condensation reaction include alcohols such as methanol, ethanol, isopropanol and tert-butyl alcohol, ketones such as methyl ethyl ketone, 2-butanone, methyl isobutyl ketone, 2-heptanone and cyclohexanone, esters such as propyl acetate, butyl acetate, isobutyl acetate, methyl propionate, ethyl lactate and propylene glycol acetate, ethers such as dibutyl ether, tetrahydrofuran, tetrahydropyran and dioxane, aromatic hydrocarbons such as benzene, toluene and xylene, halogenated hydrocarbons such as dichloromethane, chloroform, carbon tetrachloride and bromoform, and hydrocarbons such as hexane, heptane, decane and petroleum ether. Any of these solvents may be used individually, or a mixture of two or more solvents may be used. In those cases where a ketone is used as the reaction solvent, the ketone may react with the phenol (via a side reaction) under certain condensation reaction conditions. Accordingly, the reaction conditions must be selected so as to inhibit these types of side reactions. However, when formaldehyde is used as the aldehyde compound, the reactivity of the formaldehyde for the phenol is hugely greater than that of the ketone, thus the side reactions can be effectively avoided.

Further, water may also coexist in the reaction system, and a reaction solvent medium that separates into two phases, composed of water and a solvent that is not miscible with water, may also be used. Furthermore, in those cases where water coexists in this manner, the water may be removed by distillation or the like.

The catalyst used in the production of the condensate need not necessarily be removed from the produced condensate if it does not impair the use of the condensate as the component (B), although the catalyst may also be removed if necessary. In those cases where a solvent that is not miscible with water is used as the reaction solvent for the condensation reaction, removal of the catalyst may be conducted using a water washing and separation treatment. Further, the catalyst can also be removed by adding the reaction solution obtained following completion of the condensation reaction to a solvent in which the product condensate is insoluble, thereby precipitating the condensate, collecting the precipitated condensate by a solid-liquid separation, and then washing the collected condensate precipitate with water or the like.

The condensate used as the component (B) is preferably soluble in solvents. When producing the condensate, if a compound (such as phenol, m-cresol or 3,5-xylenol) having three sites for reaction with the aldehyde compound is used as the phenol, then the resulting condensate is more likely to have formed a branched molecular chain, and as the condensation reaction progresses, crosslinking reactions between molecular chains are also likely, meaning the obtained condensate tends to be insoluble in solvents. If such condensate that is insoluble in solvents is used as the component (B), then producing a polymer electrolyte membrane by forming a film of the polymer electrolyte composition tends to be comparatively difficult. In view of avoiding these difficulties, the condensate used as the component (B) is preferably soluble in solvents, and the condensate is preferably either a linear polymer, or a branched polymer that is capable of dissolving in a solvent. Accordingly, in those cases where such phenol having three sites for reaction with the aldehyde compound is used, the reaction conditions for the condensation reaction are preferably optimized so that the resulting condensate is soluble in a solvent. In this description, the expression "soluble in a solvent" means that the condensate is soluble to a concentration of at least 1% by weight in any of the solvents exemplified below as preferred solvents for use in the preparation of a polymer electrolyte solution by the solution casting method described below.

Furthermore, the component (B) used in the present invention is preferably a condensate with a molecular weight of at least 500, and more preferably 600 or more. If a low molecular weight condensate having a molecular weight of less than 500 is used as the component (B), then when the polymer electrolyte membrane is obtained, a bleeding phenomenon may cause the condensate to bleed out from the polymer electrolyte membrane. Therefore, in order to ensure that the condensate can exist stably in the polymer electrolyte membrane, the molecular weight of the condensate is preferably at least 500. Further, in those cases where the condensate is not a single compound, but is compounds with a molecular weight distribution, the absence or presence of low molecular weight components in the condensate can be confirmed based on the polystyrene-referenced number average molecular weight determined by gel permeation chromatography (hereafter abbreviated as "GPC"), by setting the elution time that corresponds with a molecular weight of 500 as a base point, and ascertaining whether or not any components are detected at a longer elution time than this base point.

In a method of producing such condensate described above, if the obtained condensate contains a low molecular weight component, then the low molecular weight component may be removed using conventional means such as reprecipitation purification.

On the other hand, the upper limit for the molecular weight of the condensate is preferably determined by the above requirement that the condensate by soluble in a solvent. For this reason, the upper limit for the molecular weight is preferably not more than 20,000, and is more preferably 10,000 or less.

As mentioned above, more preferred condensates include condensates of one or more phenols selected from the group consisting of phenol, cresol and xylenol, and an aldehyde compound that includes formaldehyde. Typical examples include condensates of m-cresol and/or p-cresol with formaldehyde (m/p-cresol novolac compounds), and condensates produced by substituting a portion of the formaldehyde with benzaldehyde and/or acetaldehyde during production of such m/p-cresol novolac compounds.

Further, such condensates are widely used as additives for photoresists, and any of these conventional condensates may be used as the component (B).

For example, Japanese Unexamined Patent Application, First Publication No. Hei 9-110751 discloses the pentanuclear novolac compound illustrated below: 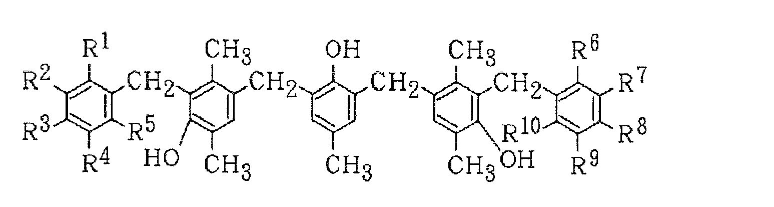 wherein one of R¹, R², R³, R⁴ and R⁵ represents a hydroxyl group, one of R⁶, R⁷, R⁸, R⁹ and R¹⁰ represents a hydroxyl group, and the remaining R¹, R², R³, R⁴, R⁵, R⁶, R⁷, R⁸, R⁹ and R¹⁰ each independently represents a hydrogen atom, an alkyl group of 1 to 6 carbon atoms, or a hydroxyl group.

Japanese Unexamined Patent Application, First Publication No. Hei 9-110758 discloses the hexanuclear novolac compound illustrated below: 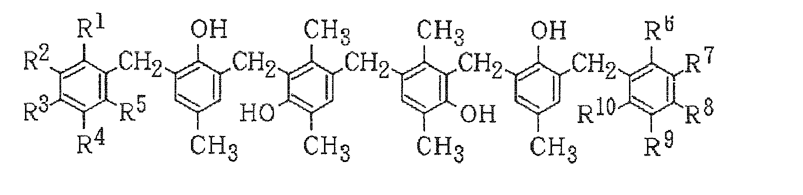 wherein one or R¹, R², R³, R⁴ and R⁵ represents a hydroxyl group, one of R⁶, R⁷, R⁸, R⁹ and R¹⁰ represents a hydroxyl group, and the remaining R¹, R², R³, R⁴, R⁵, R⁶, R⁷, R⁸, R⁹ and R¹⁰ each independently represents a hydrogen atom, an alkyl group of 1 to 6 carbon atoms, or a hydroxyl group.

Of these pentanuclear novolac compounds and hexanuclear novolac compounds, the examples in the publications mentioned above disclose compounds that have a molecular weight of at least 500, have no functional groups that hinder the phenolic hydroxyl group, and contain no comparatively low molecular weight impurities. These pentanuclear novolac compounds and hexanuclear novolac compounds can be used favorably as the component (B).

The blend proportion of the component (B) in the polymer electrolyte composition according to the present invention is selected from within a range that yields a favorable level of radical resistance without significantly impairing the ion conductivity of the polymer electrolyte of the component (A). Preferably, the proportion of the component (B) is from 0.01 to 25% by weight, and more preferably from 0.5 to 20% by weight, relative to the combined weight of the component (A) and the component (B). Provided the blend proportion of the component (B) is within the above range, then not only can favorable radical resistance be achieved, enabling the preparation of a fuel cell member that is able to achieve long-term stability for the fuel cell, but the polymer electrolyte membrane formed from the polymer electrolyte of the component (A) suffers no significant loss of the microphase-separated structure described below, meaning favorable ion conductivity can be achieved.

### <Component (A): Polymer Electrolyte>

The polymer electrolyte of the component (A) used in the present invention is a polymer electrolyte that contains a segment having an ion-exchange group and a segment having substantially no ion-exchange groups, and the copolymerization mode of which is block copolymerization or graft copolymerization.

Here, the expression "segment having an ion-exchange group" means a segment which contains an average of at least 0.5 ion-exchange groups per structural unit that constitutes the segment, and which preferably contains an average of at least 1.0 ion-exchange groups per structural unit.

On the other hand, the expression "segment having substantially no ion-exchange groups" means a segment which contains an average of not more than 0.1 ion-exchange groups per structural unit that constitutes the segment, which preferably contains an average of not more than 0.05 ion-exchange groups per structural unit, and which most preferably contains no ion-exchange groups in the segment.

Typically, that is a block copolymer in which the segment having an ion-exchange group and the segment having substantially no ion-exchange groups are bonded via a covalent bond,
a graft copolymer containing the segment having an ion-exchange group in the main chain portion and the segment having substantially no ion-exchange groups in the branch chain portion, or a graft copolymer containing the segment having an ion-exchange group in the branch chain portion and the segment having substantially no ion-exchange groups in the main chain portion.

In the polymer electrolyte, the amount of introduced ion-exchange groups that provide the ion conductivity, reported as an ion exchange capacity, is preferably from 0.5 meq/g to 4.0 meq/g, and is more preferably from 1.0 meq/g to 3.0 meq/g. Provided the ion exchange capacity is within such range, a fuel cell member such as a polymer electrolyte membrane having a high degree of ion conductivity and favorable water resistance can be obtained.

Further, the polymer electrolyte is preferably an aromatic polymer electrolyte in order that the fuel cell member may express more favorable heat resistance. Here, the term "aromatic polymer electrolyte" means a polymer electrolyte in which the two segments that constitute the polymer electrolyte both contain aromatic groups that are bonded directly thereto, bonded via a suitable atom or group of atoms, or bonded via a combination of the two. Typical examples of the atom or group of atoms that bonds the segments mutually together include divalent groups such as divalent aromatic groups, an oxygen atom, a sulfur atom, a carbonyl group, a sulfonyl group, or a combination thereof.

Furthermore, in a preferred aromatic polymer electrolyte, the segment having an ion-exchange group has an aromatic ring in the main chain of the segment, and may also have a side chain containing an aromatic ring, wherein at least one of the aromatic ring in the main chain and the aromatic ring of the side chain has an ion-exchange group bonded directly to the ring. Among them, aromatic polymer electrolytes having an ion-exchange group bonded directly to an aromatic ring in the main chain are particularly preferred. The fact that such aromatic polymer electrolyte in which an ion-exchange group is bonded directly to the aromatic ring exhibit excellent ion conductivity, was discovered by the applicants of the present invention, and was reported in Japanese Unexamined Patent Application, First Publication No. 2007-177197.

The ion-exchange group may be either a cation exchange group or an anion exchange group, but is preferably a cation exchange group such as a sulfonic acid group (-SO₃H), carboxylic acid group (-COOH), phosphoric acid group (-OP(O)(OH)₂), phosphonic acid group (-P(O)(OH)₂) or sulfonylimide group (-SO₂-NH-SO₂-). Of these, a sulfonic acid group is particularly desirable. Some or all of the cation exchange groups of the polymer electrolyte of the component (A) may be substituted with metal ions or the like to form salts, although when the polymer electrolyte is used as a fuel cell member, and particularly as a polymer electrolyte membrane, substantially all of the cation exchange groups preferably exist in a free acid state.

Furthermore, the polymer electrolyte is preferably a hydrocarbon-based polymer electrolyte in which the halogen atom content, reported as an element weight ratio, is not more than 15% by weight. Compared with conventional widely-used fluorine-based polymer electrolytes, these hydrocarbon-based polymer electrolytes offer the advantages of being inexpensive and exhibiting excellent heat resistance. More preferred hydrocarbon-based polymer electrolytes are those that contain substantially no halogen atoms, and such hydrocarbon-based polymer electrolytes offer the additional advantage that, during operation of the fuel cell, the possibility of hydrogen halides being generated and corroding other members in the fuel cell is minimal.

More specifically, examples of polymer electrolytes that are ideal for use as the component (A) include polymer electrolytes that contain a segment represented by the aforementioned formula (1a), formula (2a), formula (3a) or formula (4a) [hereafter also referred to as "formulas (1a) to (4a)"] as the segment having an ion-exchange group, and/or contain a segment represented by the aforementioned formula (1b), formula (2b), formula (3b) or formula (4b) [hereafter also referred to as "formulas (1b) to (4b)"] as the segment having substantially no ion-exchange groups.

In formulas (1a) to (4a), Ar¹ to Ar⁹ represent divalent aromatic groups. Examples of these divalent aromatic groups include divalent monocyclic aromatic groups such as a 1,3-phenylene group or 1,4-phenylene group, divalent condensed ring aromatic groups such as a 1,3-naphthalenediyl group, 1,4-naphthalenediyl group, 1,5-naphthalenediyl group, 1,6-naphthalenediyl group, 1,7-naphthalenediyl group, 2,6-naphthalenediyl group or 2,7-naphthalenediyl group, and heterocyclic aromatic groups such as a pyridinediyl group, quinoxalinediyl group or thiophenediyl group. A divalent monocyclic aromatic group is preferred.

Further, Ar¹ to Ar⁹ may each be substituted with an alkyl group of 1 to 10 carbon atoms that may have a substituent, an alkoxy group of 1 to 10 carbon atoms that may have a substituent, an aryl group of 6 to 18 carbon atoms that may have a substituent, an aryloxy group of 6 to 18 carbon atoms that may have a substituent, or an acyl group of 2 to 20 carbon atoms that may have a substituent.

In Ar¹ and/or Ar² in the structural unit that constitutes the segment of formula (1a), at least one of Ar¹ to Ar³ in the structural unit that constitutes the segment of formula (2a), Ar⁷ and/or Ar⁸ in the structural unit that constitutes the segment of formula (3a), and Ar⁹ in the structural unit that constitutes the segment of formula (4a), the aromatic ring(s) that constitute the main chain contain at least one ion-exchange group. Cation exchange groups described above are preferred as this ion-exchange group, and a sulfonic acid group is more preffered.

Ar¹¹ to Ar¹⁹ in formulas (1b) to (4b) each represents a divalent aromatic group. Examples of these divalent aromatic groups include divalent monocyclic aromatic groups such as a 1,3-phenylene group or 1,4-phenylene group, divalent condensed ring aromatic groups such as a 1,3-naphthalenediyl group, 1,4-naphthalenediyl group, 1,5-naphthalenediyl group, 1,6-naphthalenediyl group, 1,7-naphthalenediyl group, 2,6-naphthalenediyl group or 2,7-naphthaienediyl group, and heterocyclic aromatic groups such as a pyridinediyl group, quinoxalinediyl group or thiophenediyl group. A divalent monocyclic aromatic group is preferred.

Furthermore, these divalent aromatic groups may have a substituent. Details relating to this substituent are as described above for Ar¹ to Ar⁹.

A block copolymer, a graft copolymer, or a combination thereof may be used as the polymer electrolyte of the component (A) used in the present invention, provided a polymer electrolyte membrane having the microphase-separated structure described below can be obtained. However, if ease of production is also taken into consideration, then a block copolymer is preferred. Examples of segment combinations in preferred block copolymers include those combinations listed below in Table 1. Of these, (b), (c), (d), (g) and (h) are preferred, and (g) and (h) are particularly desirable.

**[Table 1]**

| Block copolymer | Segment having an ion-exchange group | Segment having substantially no ion-exchange groups |
|---|---|---|
| (a) | formula (1a) | formula (1b) |
| (b) | formula (1a) | formula (2b) |
| (c) | formula (2a) | formula (1b) |
| (d) | formula (2a) | formula (2b) |
| (e) | formula (3a) | formula (1b) |
| (f) | formula (3 a) | formula (2b) |
| (g) | formula (4a) | formula (1b) |
| (h) | formula (4a) | formula (2b) |

Furthermore, in the above block copolymers, the number of repetitions m of the structural unit in the segment having an ion-exchange group represented by one of the formulas (1a) to (4a), and the number of repetitions n of the structural unit in the segment having substantially no ion-exchange groups represented by one of the formulas (1b) to (4b), each represents an integer of 5 or more. n and m are preferably integers within a range from 5 to 1,000, and more preferably within a range from 10 to 500. Polymer electrolytes in which the numbers of repeating structural units satisfy the above range exhibit excellent balance between the ion conductivity and the mechanical strength and/or water resistance, and also offer the advantage that production of each of the segments is itself relatively simple.

Specifically, examples of ideal block copolymers include block copolymers made of a segment containing one or two or more structural units selected from the structural units having an ion-exchange group shown below (the segment having an ion-exchange group), and a segment containing one or two or more structural units selected from the structural units having no ion-exchange groups shown below (the segment having substantially no ion-exchange groups). The two segments may be bonded together directly, or may be linked via a suitable atom or group of atoms. Examples of the atom or group of atoms are the same as those listed above.

(Structural units having an ion-exchange group)

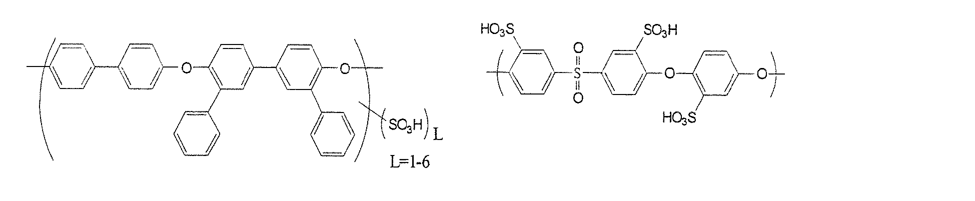

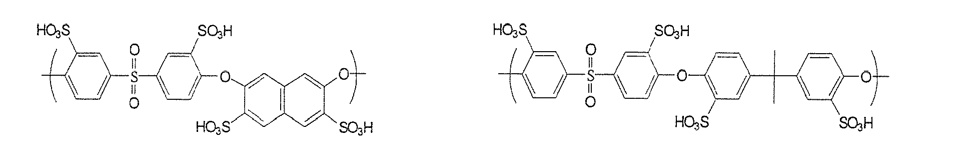

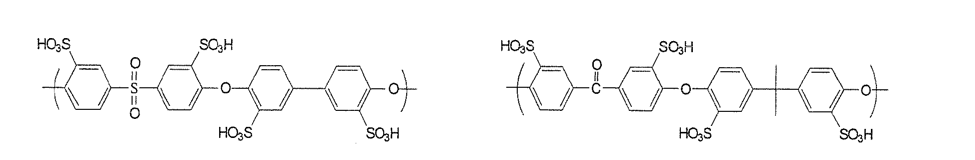

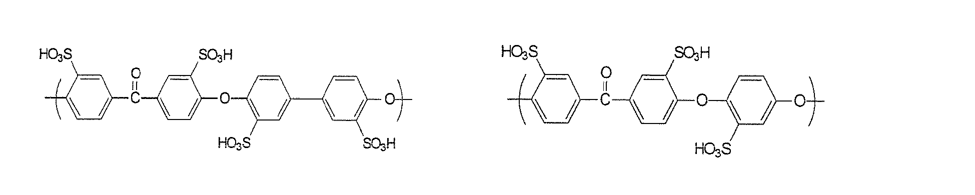

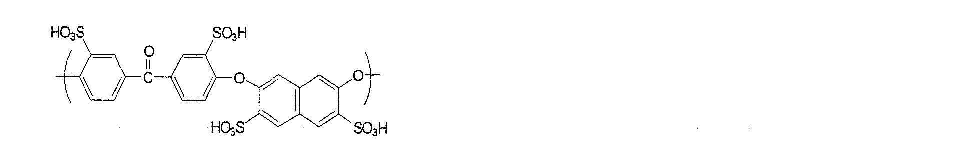

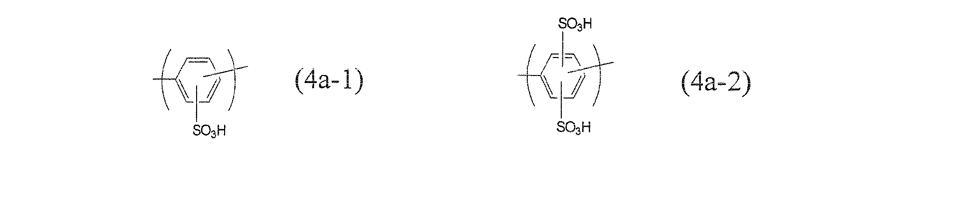

(Structural units having no ion-exchange groups)

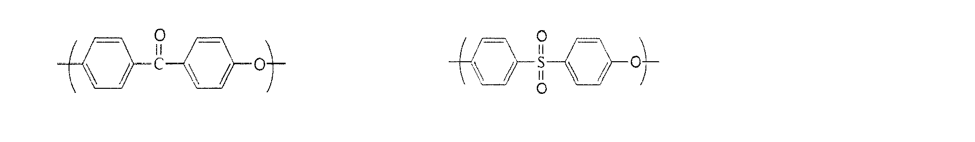

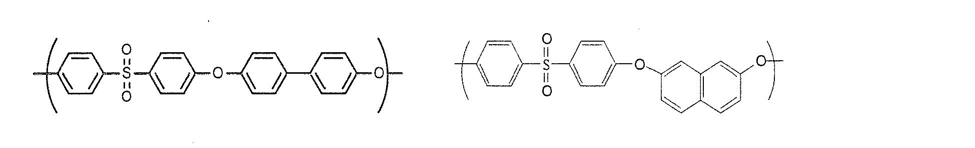

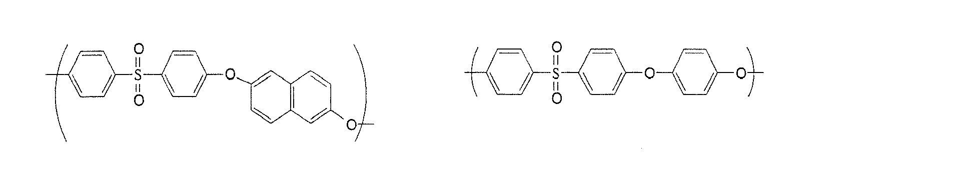

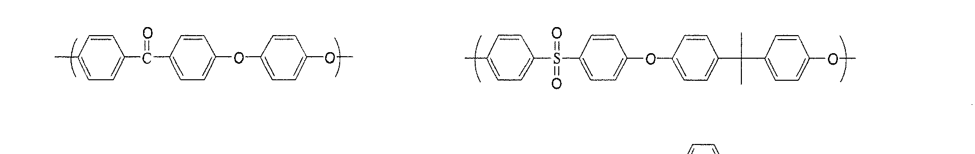

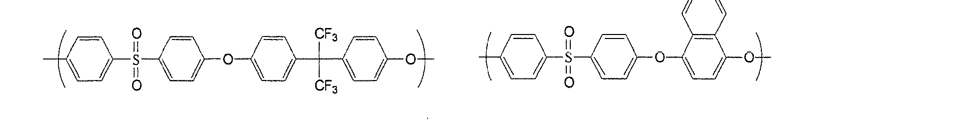

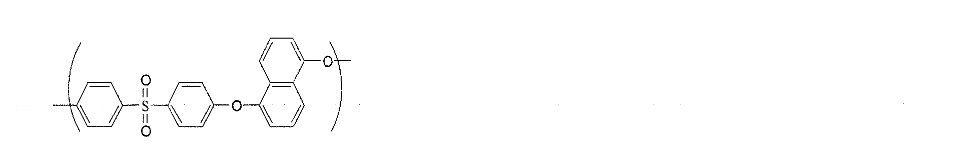

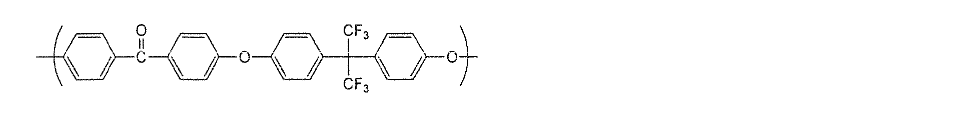

In the examples outlined above, the structural units that constitute the segment having an ion-exchange group preferably include structural units of the formula (4a-1) and/or (4a-2). Polymer electrolytes having a segment containing such structural units, and particularly polymer electrolytes having a segment composed solely of these types of structural units, are able to exhibit particularly superior ion conductivity, and because the segment adopts a polyarylene structure, the chemical stability also tends to be comparatively favorable. Moreover, a synergistic effect with the component (B) enables the production of a fuel cell member that exhibits even more superior radical resistance.

Furthermore, the molecular weight of the polymer electrolyte, reported as a polystyrene-referenced number average molecular weight determined by GPC analysis, is preferably from 5,000 to 1,000,000, and particularly preferably from 15,000 to 400,000.

Examples of the polymer electrolyte include block copolymers obtained in accordance with the method similar to that disclosed in Japanese Unexamined Patent Application, First Publication No. 2005-126684 and Japanese Unexamined Patent Application, First Publication No. 2005-139432, and block copolymers disclosed by the applicants of the present invention in Japanese Unexamined Patent Application, First Publication No. 2007-177197.

### <Polymer Electrolyte Composition>

Next, a method of producing the polymer electrolyte composition of the present invention is briefly described. The method of producing the polymer electrolyte composition is not particularly limited, provided the method enables mixing of the component (A) and the component (B). Although methods in which solids (powders) of the component (A) and the component (B) are mixed together, or methods in which the component (A) and the component (B) are converted to a paste using a suitable solvent may be used, a method in which the component (A) and the component (B) are dissolved in a suitable solvent, so that the polymer electrolyte composition is obtained in the form of a polymer electrolyte solution, is preferred as it facilitates the production of the fuel cell member such as a polymer electrolyte membrane described below.

The polymer electrolyte composition of the present invention may include components (additives) other than the component (A) and the component (B). Examples of these additives include the types of plasticizers, stabilizers and release agents typically used in polymers, and inorganic or organic microparticles that are added as water retention agents. Further, the polymer electrolyte composition of the present invention may also include polymers other than the component (A) and the component (B) (namely, other polymers), provided the ion conductivity and radical resistance of the fuel cell member produced from the polymer electrolyte composition are not significantly impaired.

### <Polymer Electrolyte Membrane>

Next, a method of producing a polymer electrolyte membrane from the polymer electrolyte composition of the present invention is described. As this production method, a method that uses the polymer electrolyte solution mentioned above (a so-called solution casting method) is particularly used.

Specifically, the component (A) and the component (B) are dissolved in an appropriate solvent, together with any other components such as other polymers or additives that may be added according to need, thereby forming a polymer electrolyte solution, this polymer electrolyte solution is cast onto a support substrate such as a glass substrate or a PET (polyethylene terephthalate) film or the like, the solvent is removed to form a polymer electrolyte membrane on top of the support substrate, and the support substrate is then removed by peeling or the like to complete preparation of the polymer electrolyte membrane.

The solvent used in preparing the polymer electrolyte solution is not particularly limited, provided it is capable of dissolving the component (A), the component (B) and any other components that may be added according to need, and can subsequently be removed. Specific examples of solvents that can be used favorably include aprotic polar solvents such as dimethylformamide (DMF), dimethylacetamide (DMAc), N-methyl-2-pyrrolidone (NMP) and dimethyl sulfoxide (DMSO), chlorine-based solvents such as dichloromethane, chloroform, 1,2-dichloroethane, chlorobenzene and dichlorobenzene, alcohols such as methanol, ethanol and propanol, and alkylene glycol monoalkyl ethers such as ethylene glycol monomethyl ether, ethylene glycol monoethyl ether, propylene glycol monomethyl ether and propylene glycol monoethyl ether. Condensates that are soluble in a solvent, which are mentioned above as being ideal as the component (B), refer to condensates that are soluble in such solvent listed above.

Any one of the solvents listed above may be used in preparing the polymer electrolyte solution, or if necessary, two or more solvents may be used as a solvent mixture. Among them, DMSO, DMF, DMAc, NMP, or a mixed solvent formed from two or more of these solvents exhibit excellent dissolution of the polymer electrolyte, and are therefore preferred.

Although the thickness of the polymer electrolyte membrane is not particularly limited, from a practical perspective, the thickness is preferably from 5 to 300 µm, and more preferably from 10 to 200 µm. Provided the thickness is within this range, a polymer electrolyte membrane having a practically applicable degree of membrane strength is easily obtained, whereas the membrane resistance tends to be small. The thickness of the polymer electrolyte membrane can be controlled by altering the concentration of the polymer electrolyte solution and the amount of the solution cast onto the substrate.

The polymer electrolyte membrane obtained from the polymer electrolyte composition of the present invention preferably has a microphase-separated structure that includes a phase in which the density of the segment having an ion-exchange group is higher than the density of the segment having substantially no ion-exchange groups (hereafter also referred to as the "hydrophilic segment phase") and a phase in which the density of the segment having substantially no ion-exchange groups is higher than the density of the segment having an ion-exchange group (hereafter also referred to as the "hydrophobic segment phase"). A polymer electrolyte membrane having this type of microphase-separated structure exhibits extremely superior ion conductivity, and the action of the component (B) yields favorable radical resistance, meaning favorable long-term stability can be achieved for the fuel cell. Investigations conducted by the inventors of the present invention revealed that in such microphase-separated structure, peroxides and radicals generated by operation of the fuel cell degrade mainly the segment having an ion-exchange group in the hydrophilic segment phase, resulting in a degradation over time of the polymer electrolyte membrane itself. The polymer electrolyte composition of the present invention is able to dramatically improve the radical resistance of the polymer electrolyte membrane, and particularly the radical resistance of the hydrophilic segment phase.

When the microphase-separated structure is viewed using a transmission electron microscopes (TEM) or the like, the hydrophilic segment phase (microdomain) and the hydrophobic segment phase (microdomain) are mixed, and the domain width of each microdomain structure, namely the identity period, is from several nm to several hundred nm. A structure having microdomain structures of 5 to 100 nm is preferred. According to a TEM analysis, it can be readily confirmed that the polymer electrolyte membrane has a microphase-separated structure, and therefore the blend amounts of the component (A) and the component (B) can be optimized to ensure that a microphase-separated structure is obtained.

Furthermore, the polymer electrolyte membrane obtained from the polymer electrolyte composition of the present invention can form a composite membrane by impregnating the polymer electrolyte composition to a porous substrate in order to further improve the strength, flexibility and durability thereof. Conventional methods may be used to form this composite membrane.

The porous substrate is not particularly limited, provided it yields the desired properties listed above, and examples include a porous membrane, woven fabric, non-woven fabric or fibril, which may be used regardless of shape and regardless of the material used. In terms of the material for the porous substrate, from the viewpoints of heat resistance and reinforcing the physical strength, an aliphatic polymer, an aromatic polymer or a fluoropolymer is preferred.

In those cases where a composite membrane is produced, the thickness of the porous substrate is preferably from 1 to 100 µm, more preferably from 3 to 30 µm and still more preferably from 5 to 20 µm, the pore size of the porous substrate is preferably within a range from 0.01 to 100 µm and more preferably from 0.02 to 10 µm, and the porosity of the porous substrate is preferably from 20 to 98% and more preferably from 40 to 95%.

Provided the thickness of the porous substrate is at least 1 µm, the strength reinforcing effect achieved following the compositing process, or the reinforcing effect as the imparted flexibility or durability tends to be particularly superior, and gas leakage (cross leak) becomes very unlikely. Further, provided the thickness is not more than 100 µm, the electrical resistance is lower, and the resulting composite membrane performs better as the ion conducting membrane of a solid polymer fuel cell. A pore size of at least 0.01 µm facilitates the impregnation of the porous substrate with the copolymer of the present invention, whereas a pore size of not more than 100 µm yields a superior reinforcing effect for the copolymer. Provided the porosity is at least 20%, the resistance to ion conduction is reduced, and provided the porosity is not more than 98%, the strength of the porous substrate itself can be ensured, enabling a greater improvement in the reinforcing effect.

Furthermore, in the case of such composite membrane, the TEM analysis may be performed by observing a portion in which the polymer electrolyte membrane has been formed, and confirming that the above type of microphase-separated structure has been formed.

### <Fuel Cell>

Next, a fuel cell using the polymer electrolyte composition of the present invention is described.

A fuel cell of the present invention can be produced by bonding a catalyst component and a conductive substance as a current collector to both surfaces of a polymer electrolyte membrane (or composite membrane) formed from the polymer electrolyte composition of the present invention (namely, production of a membrane electrode assembly).

The catalyst component is particularly limited, provided it is capable of activating the redox reaction of hydrogen or oxygen, and conventional materials may be used, although the use of either microparticles of platinum or microparticles of a platinum-based alloy as the catalyst component is preferred. These microparticles of platinum or microparticles of a platinum-based alloy are often supported on particulate or fiber-like carbon such as activated carbon or graphite.

Furthermore, by preparing a paste (known as a "catalyst ink") by mixing a carbon-supported platinum or platinum-based alloy with a solution prepared by dissolving a perfluoroalkylsulfonic acid resin as an ion-conducting component, and then applying this paste to the gas diffusion layer and performing drying, a catalyst layer that is laminated on, and integrated with, the gas diffusion layer can be obtained. By bonding the thus obtained catalyst layer to a polymer electrolyte membrane, a membrane electrode assembly for a fuel cell can be obtained. A specific example of the method that can be used is the conventional method disclosed in J. Electrochem. Soc., Electrochemical Science and Technology, 1988, 135(9), 2209. Furthermore, the fuel cell membrane electrode assembly can also be obtained by applying the catalyst ink to the polymer electrolyte membrane or polymer electrolyte composite membrane, drying the ink, and then forming the catalyst layer directly on the surface of the ink film.

Here, a catalyst ink may also be produced by replacing the aforementioned perfluoroalkylsulfonic acid resin used as the ion-conducting component for the catalyst layer with the polymer electrolyte composition of the present invention. In such a case, the carbon-supported platinum or platinum-based alloy may be mixed to a paste with the component (A) and component (B) described above. A catalyst layer obtained in this manner, using a catalyst ink containing the polymer electrolyte composition of the present invention, exhibits superior ion conductivity similar to that of the polymer electrolyte membrane described above, and also provides favorable radical resistance, meaning it is ideal as a fuel cell catalyst layer.

The conductive substance as a current collector may also use conventional substances, and the use of a porous carbon woven fabric, carbon non-woven fabric or carbon paper facilitates the efficient transport of the raw material gases to the catalyst, and is therefore preferred.

A fuel cell produced in this manner using a member formed from a polymer electrolyte composition of the present invention can be used in all manner of configurations, using hydrogen gas, reformed hydrogen gas or methanol as the fuel.

The resulting fuel cell has a practical level of electric power generation performance, and also has a very long life, and is therefore extremely useful from an industrial perspective.

The present invention is described below based on examples, although the present invention is in no way limited by these examples.

### Example 1

### [Production of a polymer electrolyte membrane 1]

2,6-bis[4-hydroxy-3-(2-hydroxy-5-methylbenzyl)-2,5-dimethylbenzyl]-4-methylphenol (the condensate 1 shown below), synthesized in accordance with the method disclosed in example 1 of Japanese Patent (Granted) Publication No. 3,834,852, was used as the component (B).

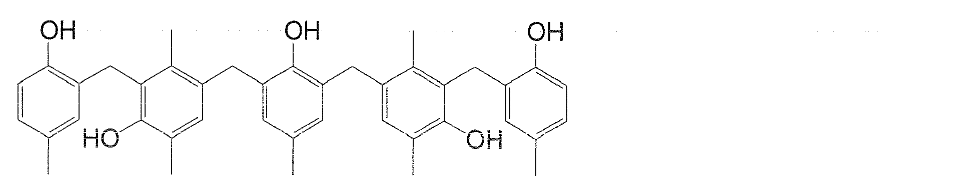

As the component (A), a segment having a sulfonic acid group (namely, the segment having an ion-exchange group) made of a structural unit represented by a formula shown below: 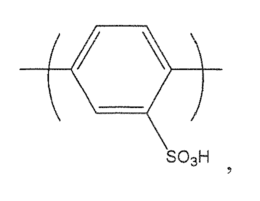 which was synthesized with reference to the method disclosed in example 7 and example 21 of International Patent Publication No. WO2007/043274 pamphlet using Sumikaexcel PES 5200P (manufactured by Sumitomo Chemical Co., Ltd.), and a block copolymer 1 (ion exchange capacity = 2.50 meq/g, Mw = 340,000, Mn = 160,000) containing a segment having no ion-exchange groups represented by a formula shown below: 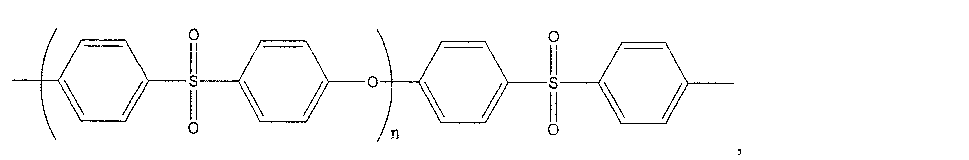 were dissolved in DMSO in amounts sufficient to generate a concentration of approximately 8.5% by weight (weight ratio of block copolymer 1 / condensate 1 = 95/5) to prepare a polymer electrolyte solution. Subsequently, the polymer electrolyte solution was coated onto and spread uniformly across a PET substrate. Following coating, drying was performed at 80°C under normal pressure, thus forming a polymer electrolyte membrane on the PET substrate. The thus obtained polymer electrolyte membrane was immersed in 2N sulfuric acid, and following subsequent thorough washing with ion-exchanged water, the membrane was dried at room temperature and then peeled away from the PET substrate to complete preparation of a polymer electrolyte membrane 1.

### [Evaluation of radical resistance of polymer electrolyte membrane 1]

The thus prepared polymer electrolyte membrane 1 was immersed at 60°C in a 3% by weight aqueous solution of hydrogen peroxide in which sufficient ferrous chloride had been dissolved to produce an iron ion concentration of 8 ppm (namely, a radical resistance aqueous test solution), and the radical resistance was evaluated by measuring the change in weight of the membrane after two hours immersion.

In other words, the weight of the polymer electrolyte membrane 1 was measured in advance, prior to immersion in the radical resistance aqueous test solution, and after two hours immersion, any adhered moisture or the like was wiped off the polymer electrolyte membrane 1, and the post-immersion weight was measured. Based on the change in weight observed, a weight retention ratio was calculated. The result revealed a weight retention ratio for the membrane following testing of 47%.

The weight retention ratio (%) was calculated as the weight of the membrane following two hours immersion divided by the weight prior to immersion x 100(%). Example 2

### [Production of a polymer electrolyte membrane 2]

A novolac resin was produced with reference to the method disclosed in the examples (resin a, paragraph [0081]) of Japanese Patent (Granted) Publication No. 3,466,218 In other words, using a mixture of m-cresol / p-cresol in a molar ratio of 40/60, formalin was added in an amount of 0.8 molar equivalents per 1 mol of the combined cresol, and a condensation reaction was conducted under reflux. Oxalic acid was used as a catalyst in the condensation reaction.

The resulting product was subjected to a molecular weight fractionation using methyl isobutyl ketone and n-heptane, and the low-molecular weight components were removed, yielding a m/p-cresol novolac resin (condensate 2) having a polystyrene-referenced number average molecular weight determined by GPC of 8,500.

This condensate 2 and the block copolymer 1 listed in production example 1 were dissolved in DMSO in amounts sufficient to generate a concentration of approximately 8.5% by weight (weight ratio of block copolymer 1 / condensate 1 = 95/5), thus forming a polymer electrolyte solution. Subsequently, the polymer electrolyte solution was coated onto and spread uniformly across a PET substrate. Following coating, drying was performed at 80°C under normal pressure, thus forming a polymer electrolyte membrane on the PET substrate. The thus obtained polymer electrolyte membrane was immersed in 2N sulfuric acid, and following subsequent thorough washing with ion-exchanged water, the membrane was dried at room temperature and then peeled away from the PET substrate to complete preparation of a polymer electrolyte membrane 2.

### [Evaluation of radical resistance of polymer electrolyte membrane 2]

With the exception of using the thus prepared polymer electrolyte membrane 2 instead of the polymer electrolyte membrane 1, the radical resistance was evaluated in the same manner as example 1, and the weight retention ratio was calculated from the change in weight of the membrane from prior to immersion in the radical resistance aqueous test solution to post-immersion. The result was a weight retention ratio of 56%.

### Comparative Example 1

### [Production of a polymer electrolyte membrane 3]

With the exception of not mixing the block copolymer 1 used in production example 1 with a condensate, but simply dissolving the copolymer in DMSO in an amount sufficient to generate a concentration of approximately 8.5% by weight, thus forming a polymer electrolyte solution, a polymer electrolyte membrane 3 was prepared in the same manner as production example 1.

### [Evaluation of radical resistance of polymer electrolyte membrane 3]

With the exception of using the thus prepared polymer electrolyte membrane 3 instead of the polymer electrolyte membrane 1, the radical resistance was evaluated in the same manner as example 1, and the weight retention ratio was calculated from the change in weight of the membrane from prior to immersion in the radical resistance aqueous test solution to post-immersion. The result revealed a weight retention ratio for the membrane following testing of 14%.

### Example 3

### [Production of a polymer electrolyte membrane 4]

A novolac resin was produced with reference to the method disclosed in the examples (resin a, paragraph [0081]) of Japanese Patent (Granted) Publication No. 3,466,218. In other words, using a phenol mixture of m-cresol / 2,5-xylenol /tert-butylhydroquinone in a molar ratio of 100/40/10, formalin was added in an amount of 0.8 molar equivalents per 1 mol of the combined phenol mixture, and a condensation reaction was conducted under reflux. Oxalic acid was used as a catalyst in the condensation reaction.

The resulting product was subjected to a molecular weight fractionation using methyl isobutyl ketone and n-heptane, and the low-molecular weight components were removed, yielding a m-cresol / 2,5-xylenol /tert-butylhydroquinone novolac resin (condensate 3) having a polystyrene-referenced number average molecular weight determined by GPC of 6,600.

This condensate 3 and the block copolymer 1 used in production example 1 were dissolved in DMSO in amounts sufficient to generate a concentration of approximately 8.5% by weight (weight ratio of block copolymer 1 / condensate 1 = 95/5), thus forming a polymer electrolyte solution. Subsequently, the polymer electrolyte solution was coated onto and spread uniformly across a PET substrate. Following coating, drying was performed at 80°C under normal pressure, thus forming a polymer electrolyte membrane on the PET substrate. The thus obtained polymer electrolyte membrane was immersed in 2N sulfuric acid, and following subsequent thorough washing with ion-exchanged water, the membrane was dried at room temperature and then peeled away from the PET substrate to complete preparation of a polymer electrolyte membrane 4.

### [Evaluation of radical resistance of polymer electrolyte membrane 4]

With the exception of using the thus prepared polymer electrolyte membrane 4 instead of the polymer electrolyte membrane 1, the radical resistance was evaluated in the same manner as example 1, and the weight retention ratio was calculated from the change in weight of the membrane from prior to immersion in the radical resistance aqueous test solution to post-immersion. The result revealed a weight retention ratio for the membrane following testing of 58%.

### Example 4

### [Production of a polymer electrolyte membrane 5]

A novolac resin was produced with reference to the method disclosed in the examples (resin a, paragraph [0081]) of Japanese Patent (Granted) Publication No. 3,466,218. In other words, using a phenol mixture of m-cresol / p-cresol / 2,5-xylenol /tert-butylhydroquinone in a molar ratio of 60/40/40/10, formalin was added in an amount of 0.8 molar equivalents per 1 mol of the combined phenol mixture, and a condensation reaction was conducted under reflux. Oxalic acid was used as a catalyst in the condensation reaction.

The resulting product was subjected to a molecular weight fractionation using methyl isobutyl ketone and n-heptane, and the low-molecular weight components were removed, yielding a m-cresol / p-cresol / 2,5-xylenol /tert-butylhydroqumone novolac resin (condensate 4) having a polystyrene-referenced number average molecular weight determined by GPC of 8,300.

This condensate 4 and the block copolymer 1 used in production example 1 were dissolved in DMSO in amounts sufficient to generate a concentration of approximately 8.5% by weight (weight ratio of block copolymer 1 / condensate 1 = 95/5), thus forming a polymer electrolyte solution. Subsequently, the polymer electrolyte solution was coated onto and spread uniformly across a PET substrate. Following coating, drying was performed at 80°C under normal pressure, thus forming a polymer electrolyte membrane on the PET substrate. The thus obtained polymer electrolyte membrane was immersed in 2N sulfuric acid, and following subsequent thorough washing with ion-exchanged water, the membrane was dried at room temperature and then peeled away from the PET substrate to complete preparation of a polymer electrolyte membrane 5.

### [Evaluation of radical resistance of polymer electrolyte membrane 5]

With the exception of using the thus prepared polymer electrolyte membrane 5 instead of the polymer electrolyte membrane 1, the radical resistance was evaluated in the same manner as example 1, and the weight retention ratio was calculated from the change in weight of the membrane from prior to immersion in the radical resistance aqueous test solution to post-immersion. The result revealed a weight retention ratio for the membrane following testing of 54%.

### Example 5

### [Production of a polymer electrolyte membrane 6]

(2-hydroxyphenyl)(4-hydroxyphenyl)methane (manufactured by Tokyo Chemical Industry Co., Ltd.) and the block copolymer 1 used in production example 1 were dissolved in DMSO in amounts sufficient to generate a concentration of approximately 8.5% by weight [weight ratio of block copolymer 1 / (2-hydroxyphenyl)(4-hydroxyphenyl)methane = 95/5], thus forming a polymer electrolyte solution. Subsequently, the polymer electrolyte solution was coated onto and spread uniformly across a PET substrate. Following coating, drying was performed at 80°C under normal pressure, thus forming a polymer electrolyte membrane on the PET substrate. The thus obtained polymer electrolyte membrane was immersed in 2N sulfuric acid, and following subsequent thorough washing with ion-exchanged water, the membrane was dried at room temperature and then peeled away from the PET substrate to complete preparation of a polymer electrolyte membrane 6.

### [Evaluation of radical resistance of polymer electrolyte membrane 6]

With the exception of using the thus prepared polymer electrolyte membrane 6 instead of the polymer electrolyte membrane 1, the radical resistance was evaluated in the same manner as example 1, and the weight retention ratio was calculated from the change in weight of the membrane from prior to immersion in the radical resistance aqueous test solution to post-immersion. The result revealed a weight retention ratio for the membrane following testing of 53%.

### Comparative Example 2

### [Production of a polymer electrolyte membrane 7]

2,2'-dihydroxybenzophenone (manufactured by Tokyo Chemical Industry Co., Ltd.) and the block copolymer 1 used in production example 1 were dissolved in DMSO in amounts sufficient to generate a concentration of approximately 8.5% by weight (weight ratio of block copolymer 1/2,2'-dihydroxybenzophenone = 95/5), thus forming a polymer electrolyte solution. Subsequently, the polymer electrolyte solution was coated onto and spread uniformly across a PET substrate. Following coating, drying was performed at 80°C under normal pressure, thus forming a polymer electrolyte membrane on the PET substrate. The thus obtained polymer electrolyte membrane was immersed in 2N sulfuric acid, and following subsequent thorough washing with ion-exchanged water, the membrane was dried at room temperature and then peeled away from the PET substrate to complete preparation of a polymer electrolyte membrane 7.

### [Evaluation of chemical stability of polymer electrolyte membrane 7]

With the exception of using the thus prepared polymer electrolyte membrane 7 instead of the polymer electrolyte membrane 1, the radical resistance was evaluated in the same manner as example 1, and the weight retention ratio was calculated from the change in weight of the membrane from prior to immersion in the radical resistance aqueous test solution to post-immersion. The result revealed a weight retention ratio for the membrane following testing of 12%.

### Comparative Example 3

### [Production of a polymer electrolyte membrane 8]

4,4'-dihydroxybenzophenone (manufactured by Tokyo Chemical Industry Co., Ltd.) and the block copolymer 1 used in production example 1 were dissolved in DMSO in amounts sufficient to generate a concentration of approximately 8.5% by weight (weight ratio of block copolymer 1 / 4,4'-dihydroxybenzophenone = 95/5), thus forming a polymer electrolyte solution. Subsequently, the polymer electrolyte solution was coated onto and spread uniformly across a PET substrate. Following coating, drying was performed at 80°C under normal pressure, thus forming a polymer electrolyte membrane on the PET substrate. The thus obtained polymer electrolyte membrane was immersed in 2N sulfuric acid, and following subsequent thorough washing with ion-exchanged water, the membrane was dried at room temperature and then peeled away from the PET substrate to complete preparation of a polymer electrolyte membrane 8.

### [Evaluation of chemical stability of polymer electrolyte membrane 8]

With the exception of using the thus prepared polymer electrolyte membrane 8 instead of the polymer electrolyte membrane 1, the radical resistance was evaluated in the same manner as example 1, and the weight retention ratio was calculated from the change in weight of the membrane from prior to immersion in the radical resistance aqueous test solution to post-immersion. The result revealed a weight retention ratio for the membrane following testing of 22%.

### Comparative Example 4

### [Production of a polymer electrolyte membrane 9]

A hindered phenol Cyanox 1790 (manufactured by Ciba Specialty Chemicals Inc., structural formula shown below) and the block copolymer 1 used in production example 1 were dissolved in DMSO in amounts sufficient to generate a concentration of approximately 8.5% by weight (weight ratio of block copolymer 1 / Cyanox 1790 = 95/5), thus forming a polymer electrolyte solution. Subsequently, the polymer electrolyte solution was coated onto and spread uniformly across a PET substrate. Following coating, drying was performed at 80°C under normal pressure, thus forming a polymer electrolyte membrane on the PET substrate. The thus obtained polymer electrolyte membrane was immersed in 2N sulfuric acid, and following subsequent thorough washing with ion-exchanged water, the membrane was dried at room temperature and then peeled away from the PET substrate to complete preparation of a polymer electrolyte membrane 9.

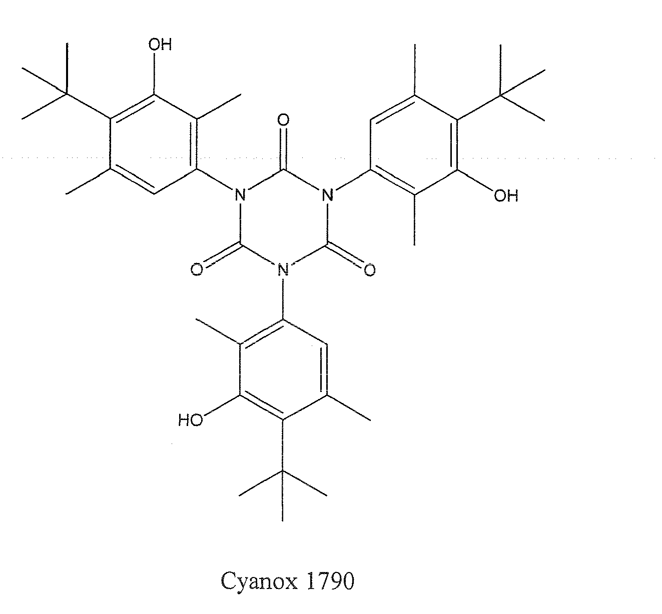

### [Evaluation of chemical stability of polymer electrolyte membrane 9]

With the exception of using the thus prepared polymer electrolyte membrane 9 instead of the polymer electrolyte membrane 1, the radical resistance was evaluated in the same manner as example 1, and the weight retention ratio was calculated from the change in weight of the membrane from prior to immersion in the radical resistance aqueous test solution to post-immersion. The result revealed a weight retention ratio for the membrane following testing of 45%.

The results of the chemical stability evaluations for the above examples and comparative examples are summarized in Table 2.

**[Table 2]**

| | Condensate used | Block copolymer / condensate weight ratio | Weight retention ratio |
|---|---|---|---|
| Example 1 | Condensate 1 | 95%/5% | 47% |
| Example 2 | Condensate 2 | 95%/5% | 56% |
| Example 3 | Condensate 3 | 95%/5% | 58% |
| Example 4 | Condensate 4 | 95%/5% | 54% |
| Example 5 | (2-hydroxyphenyl) (4-hydroxyphenyl)methane | 95%/5% | 53% |
| Comparative example 1 | None | - | 14% |
| Comparative example 2 | 2,2'-dihydroxybenzophenone | 95%/5% | 12% |
| Comparative example 3 | 4,4'-dihydroxybenzophenone | 95%/5% | 22% |
| Comparative example 4 | Cyanox 1790 | 95%/5% | 45% |

As is evident from the results in Table 2, the polymer electrolyte membranes formed from the polymer electrolyte compositions containing a condensate of a phenol and an aldehyde compound (the component (B)) and a polymer electrolyte (the component (A)) exhibited superior results for the radical resistance (weight retention ratio), determined by immersion in the radical resistance aqueous test solution, when compared with the case that employed a conventional hindered phenol-based antioxidant (comparative example 4) and those cases that employed a phenol derivative in which the phenol residue was bonded via a carbonyl group (comparative examples 2 and 3).

### Example 6

### [Evaluation of the electric power generation properties of the polymer electrolyte membrane 1]

### (Preparation of catalyst ink)

The catalyst ink required for producing the membrane electrode assembly was prepared in the following manner. Namely, 1.00 g of platinum-supporting carbon containing 50% by weight of supported platinum was added to 7 mL of a 5% by weight Nafion solution (solvent: mixture of water and lower alcohols) available commercially from Aldrich Co., Ltd., and 43.40 g of ethanol and 6.42 g of water were then added. The resulting mixture was subjected to ultrasound treatment for one hour, and then mixed for 5 hours using a stirrer to complete preparation of a catalyst ink 1.

### (Preparation of membrane electrode assembly)

Subsequently, a membrane electrode assembly 1 was prepared. First, a spray method was used to apply the catalyst ink 1 to a 5.0 cam square region in the middle of one surface of a polymer electrolyte membrane 1 obtained in the same manner as example 1. The ink was dried to remove the solvent, thus forming an anode catalyst layer. Based on the composition of the anode catalyst layer and the weight of ink applied, the amount of platinum in the anode catalyst layer was calculated as 0.60 mg/cm². Subsequently, the catalyst ink 1 was applied to the other surface of the membrane in a similar manner, thus forming a cathode catalyst layer containing 0.60 mg/cm² of platinum and completing preparation of the membrane electrode assembly 1.

Using a commercially available JARI standard cell, a fuel cell was produced. In other words, a carbon cloth that acts as a gas diffusion layer and a carbon separator in which gas transport channels had been formed by a cutting process were positioned on each surface of the membrane electrode assembly 1, a current collector and an end plate were disposed sequentially on the outside of each separator, and the resulting structure was clamped together with bolts, thus completing assembly of a fuel cell 1 having an effective membrane surface area of 25 cm².

With the thus obtained fuel cell 1 held at 80°C, humidified hydrogen was supplied to the anode, and humidified air was supplied to the cathode. At this point, the conditions were adjusted so that the back pressure at the cell gas outlets was 0.1 MPaG. The humidification of each of the raw material gases was performed by passing the gas through a bubbler, with the water temperature of the hydrogen gas bubbler set to 45°C and the water temperature of the air bubbler set to 55°C. The hydrogen gas flow rater was 529 mL/min, and the air gas flow rate was 1,665 mL/min.

Measurement of the current density when the voltage reached 0.5 V revealed a result of 1.61 A/cm².

### Reference Example 1

### [Evaluation of the electric power generation properties of the polymer electrolyte membrane 3]

With the exception of using a polymer electrolyte membrane 3 obtained in the same manner as comparative example 1 instead of the polymer electrolyte membrane 1, a membrane electrode assembly 4 and a fuel cell were prepared, and an electric power generation test was then conducted, using the same method as that described for example 1. The current density when the voltage reached 0.5 V was 1.66 A/cm². This result was substantially the same as that observed in the evaluation of the electric power generation properties of the polymer electrolyte membrane 1, confirming that addition of the condensate 1 causes no significant deterioration in the electric power generation properties.

### Example 7

### [Evaluation of durability of the polymer electrolyte membrane inside a fuel cell] (Preparation of catalyst ink)

0.83 g of a platinum-supporting carbon containing 50% by weight of supported platinum (SA50BK, manufactured by N.E. Chemcat Corporation) was added to 6 mL of a 5% by weight Nafion solution (solvent: mixture of water and lower alcohols, manufactured by Aldrich Co., Ltd.), and 13.2 ml of ethanol was then added. The resulting mixture was subjected to ultrasound treatment, and then stirred to complete preparation of a catalyst ink 2.

### (Preparation of membrane electrode assembly)

Using a large-scale pulsed spray catalyst formation apparatus (manufactured by Nordson Corporation, spray gun model: NCG-FC(CT)), the catalyst ink 2 described above was applied to a 5.2 cm square region in the middle of one surface of a polymer electrolyte membrane 1 obtained in the same manner as example 1. The same application method was used to apply 8 coats of the ink, and the membrane was then left to stand on top of the stage to remove the solvent and complete formation of an anode catalyst layer. Based on the composition of the formed anode catalyst layer and the weight of ink applied, the amount of platinum in the anode catalyst layer was calculated as 0.60 mg/cm². Subsequently, with the exception of altering the amount of ink applied, the catalyst ink 2 was applied to the other surface of the membrane in a similar manner, thus forming a cathode catalyst layer containing 0.60 mg/cm² of platinum and completing preparation of the membrane electrode assembly 2.

### (Assembly of fuel cell)

Using a commercially available JARI standard cell (manufactured by the Japan Automobile Research Institute), a fuel cell was produced. In other words, a carbon cloth that acts as a gas diffusion layer and a carbon separator in which gas transport channels had been formed by a cutting process were positioned on each surface of the membrane electrode assemblies 2 to 4 described above, a current collector and an end plate were disposed sequentially on the outside of each separator, and the resulting structure was clamped together with bolts, thus completing assembly of a fuel cell 2 having an effective membrane surface area of 25 cm².

### (Evaluation of fuel cell properties)

In order to evaluate the properties of the fuel cell 2, the voltage retention ratio following a load fluctuation test, and the weight average molecular weight (Mw) retention ratio for the segment having an ion-exchange group were measured. The methods used for producing and evaluating the fuel cell unit cell are described below.

### (Load fluctuation test for fuel cell)

With the fuel cell 2 held at 95°C, low-humidity hydrogen (70 mL/min, back pressure 0.1 MPaG) and air (174 mL/min, back pressure 0.05 MPaG) were introduced into the cell, and a load fluctuation test was performed with an open circuit and a fixed current. The fuel cell 2 was operated under these conditions for 200 hours.

### (Voltage retention ratio (units: %))

With the fuel cell 2 held at 80°C, low-humidity hydrogen at 45°C was supplied to the anode (529 mL/min, back pressure 0.1 MPaG), and low-humidity air at 55°C was supplied to the cathode (1,665 mL/min, back pressure 0.1 MPaG). Under these conditions, the voltage (mV) required to generate a current density of 0.8 A/cm² in the fuel cell was measured before and after the load fluctuation test. The voltage retention ratio was calculated from the obtained voltage values using the formula: (voltage after test / voltage before test × 100 (%)).

### (Mw (weight average molecular weight) retention ratio for the segment having an ion-exchange group (units: %))

The membrane electrode assembly was extracted from the fuel cell 2 and immersed in a mixed solution of ethanol and water, and the catalyst layers were removed by performing an ultrasound treatment. Subsequently, the polymer electrolyte membrane having the catalyst layers removed therefrom was subjected to an amine decomposition treatment to decompose the segment having substantially no ion-exchange groups in the block copolymer 1, thereby selectively extracting the segment having an ion-exchange group from the block copolymer 1. In other words, 4 mg of the polymer electrolyte membrane 1 was cut off as a sample, 10 µL of a 25% methanol solution of tetramethylammonium hydroxide was added to the sample, and a reaction was conducted for 2 hours at 100°C. After cooling, the weight average molecular weight of the segment having an ion-exchange group that had been selectively extracted from the block copolymer 1 contained in the reaction solution was measured. GPC was used for measuring the weight average molecular weight. The weight average molecular weight of the segment having an ion-exchange group in the polymer electrolyte membrane 1 was determined in the above manner before and after the load fluctuation test, and the weight average molecular weight retention ratio (weight average molecular weight after test / weight average molecular weight before test × 100 (%)) was calculated. A higher value for this weight average molecular weight retention ratio means a smaller degree of degradation of the polymer electrolyte contained in the polymer electrolyte membrane.
The GPC analysis conditions were as follows.

### [GPC analysis conditions]

Column: TSK-GEL GMHHR-M (manufactured by Tosoh Corporation)
Column temperature: 40°C
Mobile phase solvent: N,N-dimethylformamide (with sufficient added lithium bromide to yield a concentration of 10 mmol/dm³)
Solvent flow rate: 0.5 mL/min
Detection: differential refractive index, photodiode array ultraviolet absorption
(measurement wavelength: 190 to 800 nm) (300 nm, 275 nm)
Molecular weight standard samples: polystyrene

The results of determining the voltage retention ratio and the weight average molecular weight retention ratio for the fuel cell 2 as described above are listed in Table 3.

### Comparative Example 5

With the exception of replacing the polymer electrolyte membrane 1 with the polymer electrolyte membrane 9 used in comparative example 4, the same tests as example 7 were conducted, a fuel cell 3 was prepared, and the voltage retention ratio and the weight average molecular weight retention ratio for the fuel cell 3 were measured. The results are listed in Table 3.

**[Table 3]**

| | Fuel cell | Condensate used | Block copolymer / condensate weight ratio | Voltage retention ratio (%) | Weight average molecular weight retenion ratio (%) |
|---|---|---|---|---|---|
| Example 7 | Fuel cell 2 | Condensate 1 | 95% / 5% | 86 | 62 |
| Comparative example 5 | Fuel cell 3 | Cyanox 1790 | 95% / 5% | 83 | 47 |

From the results in Table 3 it is revealed that the polymer electrolyte membrane obtained from the polymer electrolyte composition containing the condensate of the component (B) and the polymer electrolyte of the component (A) exhibited a high weight average molecular weight retention ratio for the segment having an ion-exchange group during fuel cell start-stop testing, meaning deterioration in the electric power generation properties over time was able to be suppressed.

From the above results it is revealed that when a condensate of a phenol and an aldehyde compound (the component (B)) is added to a polymer electrolyte (a polymer electrolyte containing a segment having an ion-exchange group and a segment having substantially no ion-exchange groups), the radical resistance of the polymer electrolyte membrane can be increased dramatically. Accordingly, a fuel cell member such as a polymer electrolyte membrane obtained from the polymer electrolyte composition of the present invention exhibits excellent radical resistance relative to peroxides and radicals generated during operation of the fuel cell, meaning it not only has a practically applicable level of electric power generation performance, but also exhibits excellent long-term stability, enabling the life of the fuel cell to be extended.

### INDUSTRIAL APPLICABILITY

According to the polymer electrolyte composition of the present invention, a member for a fuel cell such as a polymer electrolyte membrane can be obtained that exhibits excellent radical resistance while maintaining satisfactory electric power generation properties. Further, a polymer electrolyte membrane formed from the polymer electrolyte composition of the present invention can be used to produce a fuel cell that exhibits excellent long-term stability while retaining a practically applicable level of electric power generation performance, and is therefore extremely useful from an industrial perspective.

## Claims

1. A polymer electrolyte composition, comprising the following components (A) and (B):
(A) a polymer electrolyte which comprises a segment having an ion-exchange group and a segment having substantially no ion-exchange groups and the copolymerization mode of which is block copolymerization or graft copolymerization,
(B) a condensate of a phenol and an aldehyde compound.

2. The polymer electrolyte composition according to claim 1, wherein the component (B) is a condensate that is soluble in a solvent.

3. The polymer electrolyte composition according to claim 1, wherein the component (B) is a condensate having a molecular weight of 500 or more.

4. The polymer electrolyte composition according to claim 1, wherein the component (B) is a condensate of at least one phenol selected from the group consisting of phenol, cresol and xylenol, and an aldehyde compound.

5. The polymer electrolyte composition according to claim 1, wherein the amount of the component (B), relative to the combined weight of the component (A) and the component (B), is from 0.01 to 25% by weight.

6. The polymer electrolyte composition according to claim 1, wherein the component (A) is an aromatic polymer electrolyte.

7. The polymer electrolyte composition according to claim 1, wherein the component (A) is an aromatic polymer electrolyte in which the segment having an ion-exchange group has an aromatic ring in the main chain of the segment, and may further have a side chain containing an aromatic ring, and has an ion-exchange group bonded via a direct bond to at least one of the aromatic ring in the main chain and the aromatic ring in the side chain.

8. The polymer electrolyte composition according to claim 1, wherein the component (A) is a polymer electrolyte comprising a segment having an ion-exchange group, the segment being represented by the following formula (1a), formula (2a), formula (3a) or formula (4a): 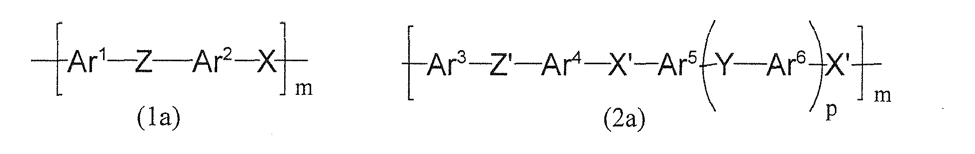 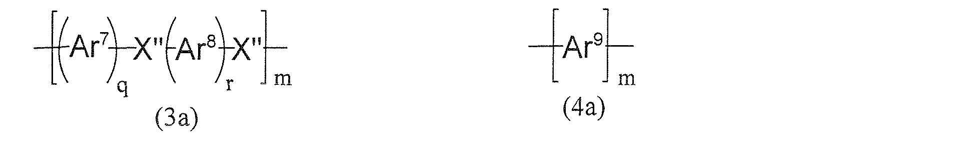 wherein m represents an integer of 5 or more, Ar¹ to Ar⁹ each independently represents a divalent aromatic group which has an aromatic ring in the main chain thereof and may further have an aromatic ring as a side chain, and in which an ion-exchange group is bonded directly to at least one of the aromatic ring in the main chain and the aromatic ring in the side chain, Z and Z' each independently represents CO or SO₂, X, X' and X" each independently represents O or S, Y represents a direct bond or a group represented by the following formula (lc), p represents 0, 1 or 2, and q and r each independently represents 1, 2 or 3, 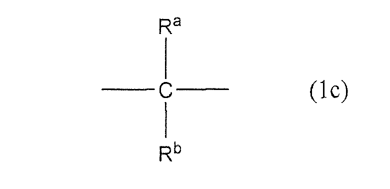 wherein R^{a} and R^{b} each independently represents a hydrogen atom, an alkyl group of 1 to 10 carbon atoms that may have a substituent, an alkoxy group of 1 to 10 carbon atoms that may have a substituent, an aryl group of 6 to 18 carbon atoms that may have a substituent, an aryloxy group of 6 to 18 carbon atoms that may have a substituent, or an acyl group of 2 to 20 carbon atoms that may have a substituent, and R^{a} and R^{b} may be linked to form a ring.

9. The polymer electrolyte composition according to claim 1, wherein the component (A) is a polymer electrolyte comprising a segment having substantially no ion-exchange groups represented by the following formula (1b), formula (2b), formula (3b) or formula (4b): 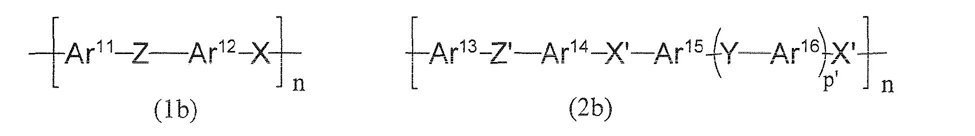 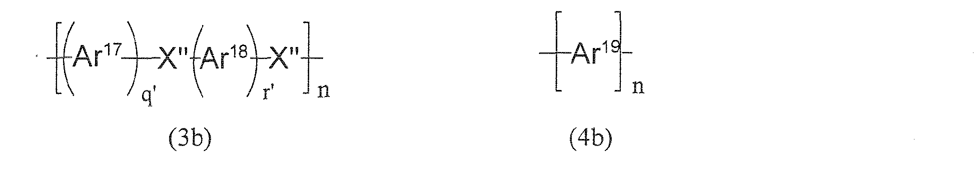 wherein n represents an integer of 5 or more, Ar¹¹ to Ar¹⁹ each independently represents a divalent aromatic group that has an aromatic ring in the main chain thereof and may further have an aromatic ring as a side chain, Z and Z' each independently represents CO or SO₂, X, X' and X" each independently represents O or S, Y represents a direct bond or a group represented by the following formula (1c), p' represents 0, 1 or 2, and q' and r' each independently represents 1, 2 or 3, 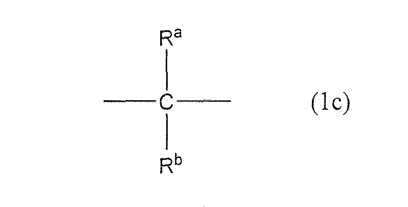 wherein R^{a} and R^{b} each independently represents a hydrogen atom, an alkyl group of 1 to 10 carbon atoms that may have a substituent, an alkoxy group of 1 to 10 carbon atoms that may have a substituent, an aryl group of 6 to 18 carbon atoms that may have a substituent, an aryloxy group of 6 to 18 carbon atoms that may have a substituent, or an acyl group of 2 to 20 carbon atoms that may have a substituent, and R^{a} and R^{b} may be linked to form a ring.

10. The polymer electrolyte composition according to claim 1, wherein the component (A) is a polymer electrolyte having a sulfonic acid group.

11. A polymer electrolyte membrane, formed from the polymer electrolyte composition according to claim 1.

12. The polymer electrolyte membrane according to claim 11, having a microphase-separated structure comprising a phase in which the density of the segment having an ion-exchange group is higher than the density of the segment having substantially no ion-exchange groups, and a phase in which the density of the segment having substantially no ion-exchange groups is higher than the density of the segment having an ion-exchange group.

13. A membrane-electrode assembly, comprising the polymer electrolyte membrane according to claim 11.

14. A catalyst layer, formed from the polymer electrolyte composition according to claim 1.

15. A membrane-electrode assembly, comprising the catalyst layer according to claim 14.

16. A solid polymer fuel cell, comprising the membrane-electrode assembly according to claim 13 or claim 15.
